# EUROPEAN PATENT APPLICATION

(11) **EP 4 807 334 A1**
(43) Date of publication of application: **16.09.2026**
(21) Application number: 25162475.5
(22) Date of filing: 09.03.2025
(51) Int. Cl.: G01M 3/18, G01M 3/28

(54) **A METHOD AND A DEVICE FOR MONITORING OF CONDITION OF A CABLE CONDUIT**

(71) Applicant: ABB Schweiz AG, 5400 Baden (CH)
(72) Inventor: Rybak, Andrzej, 30-349 Kraków (PL); Rzepecki, Michal, 30-650 Kraków (PL); Bacher, Szymon, Krakow (PL); Penuela, Oscar Sarmiento, Zürich (CH)
(74) Representative: AOMB Polska Sp. z.o.o.

(57) **Abstract**

A method for monitoring of condition of a cable conduit, in particular a corrugated cable conduit, comprising the following steps: detecting (101A1) values of relative concentration of gas with variable concentration ***Rx*_{*in*(*i*)}** inside a cable conduit (1) in a preset time window and creating (102A1) time series of the values of relative concentration of gas with variable concentration Rxᵢₙ₍ᵢ₎ inside the cable conduit (1), wherein each of said values has an assigned timestamp or each of said values is detected (101A1) with a predefined sampling rate, where i = (1, 2, ..., *n*); detecting (101A2) values of relative concentration of gas with variable concentration *Rx*_{*out*(*i*)} outside the cable conduit (1) in the preset time window and creating (102A2) time series of the values of relative concentration of gas with variable concentration *Rx*_{*out*(*i*)} outside the cable conduit (1), wherein each of said values has an assigned timestamp or each of said values is detected (101A2) with the predefined sampling rate, where i = (1, 2, ...,n); wherein the detection (101A1) of the values of relative concentration of gas with variable concentration Rxᵢₙ₍ᵢ₎ inside the cable conduit (1) and the detection (101A2) of the values of relative concentration of gas with variable concentration *Rx*_{*out*(*i*)} outside the cable conduit (1) is synchronized; determining (109) a correlation coefficient based on the values of relative concentration of gas with variable concentration *Rx*_{*in*(*i*)} inside the cable conduit (1) from the created (102A1) time series and on the values of relative concentration of gas with variable concentration *Rx*_{*one*(*i*)} outside the cable conduit (1) from the created (102A2) time series, where i = (1, 2, ...,n); assessing (110) condition of the cable conduit (1) by comparing the determined (109) correlation coefficient to a threshold value such that when said correlation coefficient exceeds the threshold value, the cable conduit (1) is considered non-hermetic.

## Description

### Technical field

The present invention relates to a method for monitoring of condition of a cable conduit, in particular a corrugated conduit. Furthermore, the present invention relates to a device for monitoring of condition of a cable conduit, in particular a corrugated conduit.

### Background of the invention

From European patent EP3443248B1 there is known a conduit clip comprising a ring member adapted to be placed around a conduit. Said ring member comprises two semi-circular ring portions connected or joined by a hinge. One of said portions has a male flap engageable in a female recess of the other portion. It is retained by a nose of the male flap engaging in an aperture of the recess. Further, the ring member has upstanding projections configured to engage with groves in a sheath of the conduit when placed around it.

From British patent application GB2605489A there is known a repair clamp for a burst pipe, hose, exhaust or an electrical cable. The clamp comprises a pair of housing parts connected by a hinge, fastening means that can be one or more threaded bolts or screws. The repair clamp comprises a rubber gasket which runs around the inner circumference of said clamp. The rubber gasket can be flat faced or of a waffle type. It can also be stepped outwards at one half/ side to engage with capillary fittings when leaking and be tightened onto.

From Chinese utility model CN218976243U there is known a pipe body connecting sleeve comprises a lower connecting sleeve, an upper connecting sleeve spliced with the lower connecting sleeve and a fixed clamping plate on said lower and upper connecting sleeve. The fixed clamping plate, the lower connecting sleeve and the upper connecting sleeve are provided with a buckle assembly. The pipe body connecting sleeve includes gaskets installed in the inner surfaces of the upper connecting sleeve and the lower connecting sleeve.

Japanese patent application JP2010223409A discloses a corrugated pipe connecting joint comprising half cylinder members with flanges provided on both ends of said members. The flanges are provided with engaging portions so that the half cylinder members can be engaged with each other. The corrugated pipe connecting joint comprises a sealing member extending on the inner surface of said joint. The sealing member has a shape corresponding to a shape of corrugated pipes which are to be connected.

Chinese utility model CN213040040U discloses a joint device for the butt joint of plastic corrugated pipes comprising clamping portions and a sealing rubber layer provided on the inner surface of said clamping portions. One of the clamping portions has a though-hole in the middle of its side wall and a bellows pressure gauge is sealed and connected to said through-hole.

Korean patent KR102370224B1 discloses a cover for bellows comprising a body portion, a packing portion and window portions. The body portion includes a first body portion and a second body portion hinged by a hinge portion. The first and second body portions can be closed to surround a bellow by means a connection portion including a first coupling member and a second coupling member. Further, window portions are located in the first and second body portion so that a state of a surrounded bellow can be checked. The packing portion is disposed around the inner surface of the body portion and may be in close contact with the outer surface of said bellow. Furthermore, the cover comprises a leak detection sensor and a temperature sensor. Each signal generated by the leak detection sensor and the temperature sensor is transmitted to a control unit, and the control unit can measure gas leakage and temperature change.

American patent US11557886B2 discloses a monitoring sensor device for mounting directly on a cable conduit. The monitoring sensor device has a cavity and a sensor positioned inside the cavity. The sensor is configured to detect humidity and/or temperature inside a cable conduit.

Although the solutions known from the prior art discloses variety of proposals for monitoring of conditions of cable conduits, methods for monitoring of condition of cable conduits, in particular corrugated cable conduits, could be characterized by higher accuracy in assessing condition of such cable conduits, in particular in assessing a level of hermiticity of cable conduits and associated detection of cracks in such cable conduits, while maintaining the simplicity of execution of such methods, and as a result characterized by greater reliability of said assessment comparing to known solutions. Further, there is a need to provide devices for monitoring of condition of cable conduits, in particular corrugated cable conduits, that are adapted to execute such methods and as a result are also characterized by greater reliability of said assessment comparing to known solutions. Therefore, an object of the invention is to provide a method and a device for monitoring of condition of a cable conduit, in particular a corrugated cable conduit, characterized by greater reliability of assessment of condition of a cable conduit compared to known solutions.

### The essence of the invention

The object of the invention is a method for monitoring of condition of a cable conduit, in particular a corrugated cable conduit, comprising the following steps: detecting values of relative concentration of gas with variable concentration *Rx*_{*in*(*i*)} inside a cable conduit in a preset time window and creating time series of the values of relative concentration of gas with variable concentration *Rx*_{*in*(*i*)} inside the cable conduit, wherein each of said values has an assigned timestamp or each of said values is detected with a predefined sampling rate, where i = (1, 2, ... , *n*); detecting values of relative concentration of gas with variable concentration *Rx*_{*out*(*i*)} outside the cable conduit in the preset time window and creating time series of the values of relative concentration of gas with variable concentration *Rx*_{*out*(*i*)} outside the cable conduit, wherein each of said values has an assigned timestamp or each of said values is detected with the predefined sampling rate, where i = (1, 2, ... ,*n*); wherein the detection of the values of relative concentration of gas with variable concentration *Rx*_{*in*(*i*)} inside the cable conduit and the detection of the values of relative concentration of gas with variable concentration *Rx*_{*out*(*i*)} outside the cable conduit is synchronized; determining a correlation coefficient based on the values of relative concentration of gas with variable concentration *Rx*_{*in*(*i*)} inside the cable conduit from the created time series and on the values of relative concentration of gas with variable concentration *Rx*_{*out*(*i*)} outside the cable conduit from the created time series, where i = (1, 2, ... , *n*); assessing condition of the cable conduit by comparing the determined correlation coefficient to a threshold value such that when said correlation coefficient exceeds the threshold value, the cable conduit is considered non-hermetic.

The application of the disclosed method for monitoring of condition of a cable conduit, in particular a corrugated cable conduit, provides higher accuracy in assessing condition of the cable conduit, in particular in assessing a level of hermiticity of the cable conduit and associated detection of cracks in such cable conduit, while maintaining the simplicity of its execution, and as a result provides greater reliability of said assessment compared to known solutions. Further, the disclosed method allows for early detection of non-hermiticity of the cable conduit and as a consequence damage of cable systems located inside such cable conduit.

Preferably, wherein after the steps of creating time series of the values of relative concentration of gas with variable concentration *Rx*_{*in*(*i*)} inside the cable conduit and creating time series of the values of relative concentration of gas with variable concentration *Rx*_{*out*(*i*)} outside the cable conduit, where *i = (1, 2, ...,n);* and before the step of determining a correlation coefficient based on the values of relative concentration of gas with variable concentration *Rx*_{*in*(*i*)} inside the cable conduit from the created time series and on the values of relative concentration of gas with variable concentration *Rx*_{*out*(*i*)} outside the cable conduit from the created time series, where i = (1, 2, ... , *n*); low-frequency spectral components of the values of relative concentration of gas with variable concentration *Rx*_{*in*(*i*)} inside the cable conduit from the created time series and low-frequency spectral components of the values of relative concentration of gas with variable concentration *Rx*_{*out*(*i*)} outside the cable conduit from the created time series are removed from Fourier spectrums of said values, where i = (1, 2, ... , *n*); and inverse Fourier transform is performed for high frequency spectral components of said values of relative concentration of gas with variable concentration *Rx*_{*in*(*i*)} inside the cable conduit and inverse Fourier transform is performed for high frequency spectral components of said values of relative concentration of gas with variable concentration *Rx*_{*out*(*i*)} outside the cable conduit, where i = (1, 2, ... ,*n*).

The application of the disclosed steps ensures an additional increase in the reliability of the method for monitoring of condition of a cable conduit, in particular a corrugated cable conduit. This is because the removed low-frequency spectral components of the values of relative concentration of gas with variable concentration *Rx*_{*in*(*i*)} inside the cable conduit and the removed low-frequency spectral components of the values of relative concentration of gas with variable concentration *Rx*_{*out*(*i*)} outside the cable conduit are associated with diffusion of molecules of gas with variable concentration inside the cable conduit and molecules of gas with variable concentration outside the cable conduit, which negatively affects the assessment of condition of the cable conduit. The high frequency spectral components of said values left are the most valuable components for the purpose of the assessment of condition of the cable conduit, and may, for example, be related to the presence of cracks in such cable conduit, which in turn indicates lack of the hermiticity of the cable conduit.

Preferably, the gas with variable concentration is carbon dioxide *CO*₂ and the detected values are values of relative concentration of carbon dioxide *RCO*_{2(*in*(*i*))} inside the cable conduit and values of relative concentration of carbon dioxide *RCO*_{2(*out*(*i*))} outside the cable conduit, where i = (1, 2, ... ,*n*).

The detection of the values of relative concentration of carbon dioxide *RCO*_{2(*in*(*i*))} inside the cable conduit and the values of relative concentration of carbon dioxide *RCO*_{2(*out*(*i*))} outside the cable conduit, where i = (1, 2, ... , *n*), is particularly applicable in food processing facilities, due to the fact that it is emitted during fermentation of food products.

Preferably, the gas with variable concentration is methane *CH*₄ and the detected are values of relative concentration of methane *CH*_{4(*in*(*i*))} inside the cable conduit and values of relative concentration of methane *CH*_{4(*out*(*i*))} outside the cable conduit, where i = (1, 2, ... ,*n*).

The detection of the values of relative concentration of methane *CH*_{4(*in*(*i*))} inside the cable conduit and the values of relative concentration of methane *CH*_{4(*out*(*i*))} outside the cable conduit, where i = (1, 2, ... , *n*), is particularly applicable in places where there are large changes in the concentration of this gas, e.g. sewage or pig rearing sites.

Preferably, the gas with variable concentration is water *H₂O* and the detected values are values of relative humidity *RH*_{*in*(*i*)} inside the cable conduit and values of relative humidity *RH*_{*out*(*i*)} outside the cable conduit, where i = (1, 2, ... ,*n*).

Performing of the detection of the values of relative humidity *RH*_{*in*(*i*)} inside the cable conduit and the values of relative humidity *RH*_{*out*(*i*)} outside the cable conduit, where i = (1, 2, ... , *n*), ensures higher accuracy in assessing condition of the cable conduit comparing to known solutions.

Preferably, the determined correlation coefficient is Pearson correlation coefficient.

The application of Pearson correlation coefficient ensures the simplicity of determining the correlation coefficient, which leads to the simplification of the operation of the disclosed method, and further to the reduction of operation time of said method.

Preferably, the determined correlation coefficient is Spearman correlation coefficient.

The application of Spearman correlation coefficient ensures acceleration of the disclosed method as the use of said correlation coefficient makes it possible to use smaller time windows than those used with Pearson correlation coefficient.

Preferably, in addition to the detection of the values of relative humidity *RH*_{*in*(*i*)} inside the cable conduit, instantaneous values of temperature *T*_{*in*(*i*)} inside the cable conduit are detected in said preset time window and there are created time series of the instantaneous values of temperature *T*_{*in*(*i*)} inside the cable conduit, wherein each of the instantaneous values of temperatures *T*_{*in*(*i*)} inside the cable conduit has an assigned timestamp or is detected with the predefined sampling rate, where i = (1, 2, ... , *n*); and in addition to the detection of the values of relative humidity *RH*_{*out*(*i*)} outside the cable conduit, instantaneous values of temperature *T*_{*out*(*i*)} outside the cable conduit are detected in said preset time window and there are created time series of the instantaneous values of temperature *T*_{*out*(*i*)} outside the cable conduit, wherein each of the instantaneous values of temperature *T*_{*out*(*i*)} outside the cable conduit has an assigned timestamp or is detected with the predefined sampling rate; the values of relative humidity *RH*_{*in*(*i*)} inside the cable conduit from the created time series and the values of relative humidity *Rx*_{*out*(*i*)} outside the cable conduit from the created time series are converted into, respectively, values of absolute humidity *AH*_{*in*(*i*)} inside the cable conduit and values of absolute humidity *AH*_{*out*(*i*)} outside the cable conduit to create time series of these values, wherein said conversions are performed with the usage of, respectively, the instantaneous values of temperature *T*_{*in*(*i*)} inside the cable conduit from the created time series and the instantaneous values of temperature *T*_{*out*(*i*)} outside the cable conduit from the created time series, where i = (1, 2, ... , *n*), and according to the formula ${AH}_{in \left(i\right) / out \left(i\right)} = 216.7 \left(\frac{\frac{{RH}_{in \left(i\right) / out \left(i\right)}}{100} A exp \left(\frac{{mT}_{in \left(i\right) / out \left(i\right)}}{T + {T}_{in \left(i\right) / out \left(i\right)}}\right)}{273.15 + {T}_{in \left(i\right) / out \left(i\right)}}\right)$
*AH*_{*in*(*i*)/*out*(*i*)} - a value of absolute humidity inside or outside the cable conduit, where i = (1, 2, ... , *n*);
*RH*_{*in*(*i*)/*out*(*i*)} - a value of relative humidity inside or outside the cable conduit, where i = (1, 2, ... , *n*);
*T*_{*in*(*i*)/*out*(*i*)} - an instantaneous value of temperature inside or outside the cable conduit, where i = (1, 2, ... , *n*);
m = 17.62
*T* = 243.21 °C
*A* = 6.112 *hPa*
wherein *m*, *T, A* constitute conversion parameters for determining values of absolute humidity *AH*_{*in*(*i*)/*out*(*i*)} inside or outside the cable conduit, wherein said conversion parameters result from adopted SI measurement units; and then the correlation coefficient is determined based on the values of absolute humidity *AH*_{*in*(*i*)} inside the cable conduit from the created time series and on the values of absolute humidity *AH*_{*out*(*i*)} outside the cable conduit from the created time series, where i = (1, 2, ... , *n*).

The application of the above disclosed method steps ensures a further increase in the reliability of the method for monitoring of condition of a cable conduit, in particular a corrugated cable conduit.

Preferably, after the steps of creating time series of the instantaneous values of temperature *T*_{*in*(*i*)} inside the cable conduit in said preset time window and creating time series of the instantaneous values of temperature *T*_{*out*(*i*)} outside the cable conduit in said preset time window, where i = (1, 2, ... , *n*), and before the steps of conversions of the values of relative humidity *RH*_{*in*(*i*)} inside the cable conduit and the values of relative humidity *RH*_{*out*(*i*)} outside the cable conduit into, respectively, the values of absolute humidity *AH*_{*in*(*i*)} inside the cable conduit and the values of absolute humidity *AH*_{*out*(*i*)} outside the cable conduit, where i = (1, 2, ... , *n*); low-frequency spectral components of the instantaneous values of temperature *T*_{*in*(*i*)} inside the cable conduit from the created time series are removed from Fourier spectrums of said values and low-frequency spectral components of the instantaneous values of temperature *T*_{*out*(*i*)} outside the cable conduit from the created time series are removed from Fourier spectrums of said values, where i = (1, 2, ... ,*n*); and inverse Fourier transform is performed for high frequency spectral components of the instantaneous values of temperature *T*_{*in*(*i*)} inside the cable conduit and inverse Fourier transform is performed for high frequency spectral components of the instantaneous values of temperature *T*_{*out*(*i*)} outside the cable conduit, where i = (1, 2, ... ,*n*).

The application of the disclosed steps ensures an additional increase in the reliability of the method for monitoring of condition of a cable conduit, in particular a corrugated cable conduit. Thus, the disclosed here method steps ensure the highest increase in the reliability of the method for monitoring of condition of a cable conduit, in particular a corrugated cable conduit, compared to known solutions.

Further, the object of the invention is a device for monitoring of condition of a cable conduit, in particular a corrugated cable conduit, comprising a clamp for clamping on a cable conduit, wherein the clamp comprises at least one first sensor exposed to the environment inside the cable conduit, wherein the at least one first sensor is configured to detect values of relative concentration of gas with variable concentration *Rx*_{*in*(*i*)} inside a cable conduit; a control unit, wherein the control unit is configured to communicate with the at least one first sensor. The clamp comprises further at least one second sensor exposed to the environment outside the cable conduit, wherein the at least one second sensor is configured to detect values of relative concentration of gas with variable concentration *Rx*_{*out*(*i*)} outside the cable conduit; the control unit is configured further to communicate with the at least one second sensor and to carry out the steps of the method according to the invention.

The application of the device for monitoring of condition of a cable conduit, in particular a corrugated cable conduit, as disclosed above allows to execute the method according to the invention and thus said device is characterized by higher accuracy in assessing condition of a cable conduit, in particular assessing a level of hermiticity of a cable conduit and associated detection of cracks in such cable conduit, and as a result said arrangement is characterized by greater reliability of said assessment compared to known solutions. Further, the disclosed device allows for early detection of non-hermiticity of a cable conduit and as a consequence damage of cable systems located inside such cable conduit.

Preferably, the at least one first sensor is configured to detect values of relative humidity *RH*_{*in*(*i*)} inside the cable conduit and to detect instantaneous values of temperature *T*_{*in*(*i*)} inside the cable conduit and wherein the at least one second sensor is configured to detect values of relative humidity *RH*_{*out*(*i*)} inside the cable conduit and to detect instantaneous values of temperature *T*_{*out*(*i*)} outside the cable conduit (1), where i = (1, 2, ... , *n*), wherein the control unit is configured further to carry out the steps of the method according to the invention.

Preferably, the control unit is configured to carry out the steps of the method according to the invention or the arrangement comprises a high-pass filter configured to communicate with the control unit and to carry out the steps of the method according to the invention.

Preferably, the device comprises a seal located on the internal surface of the body of the clamp.

The application of the seal located on the internal surface of the body of the clamp allows a cable conduit to be repaired quickly using the disclosed device. Said seal provides protection against uncontrolled penetration of moisture and fine particles into the interior of said conduit, and as a result, extends its life, and therefore life of cable systems located inside such cable conduit.

Preferably, the device comprises a notification unit configured to communicate with the control unit and to notify a user of the device about hermiticity/non-hermicity of the cable conduit.

Preferably, the control unit and the notification unit are embedded in a body of the clamp.

### Advantages of the invention

The method and device according to the invention increase safety in the use of cable systems that run in cable conduits compared to the known solutions.

The method and device according to the invention lead to increased lifespan of used cable systems.

The method and arrangement according to the invention allows for detection of cracks in cable conduits. As a result, it allows predictive maintenance of cable conduits.

The method and device according to the invention allows for monitoring of cable conduits without the need to dismantle cable systems.

The method and device according to the invention allows for detection of unexpected states of devices nearby the device according to the invention, for example overheating of said devices.

The device according to the invention, due to the use of a seal, allows for faster, cheaper and more reliable repairing of a damaged cable conduit compared to the known solutions.

### Description of drawing figures

The subject of the invention is shown in the embodiments in a drawing, in which:

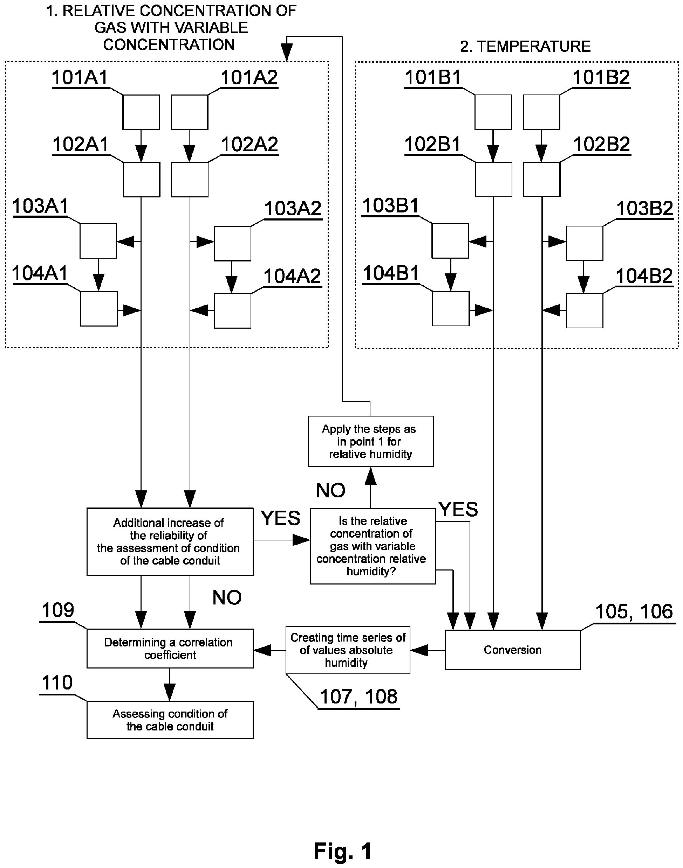

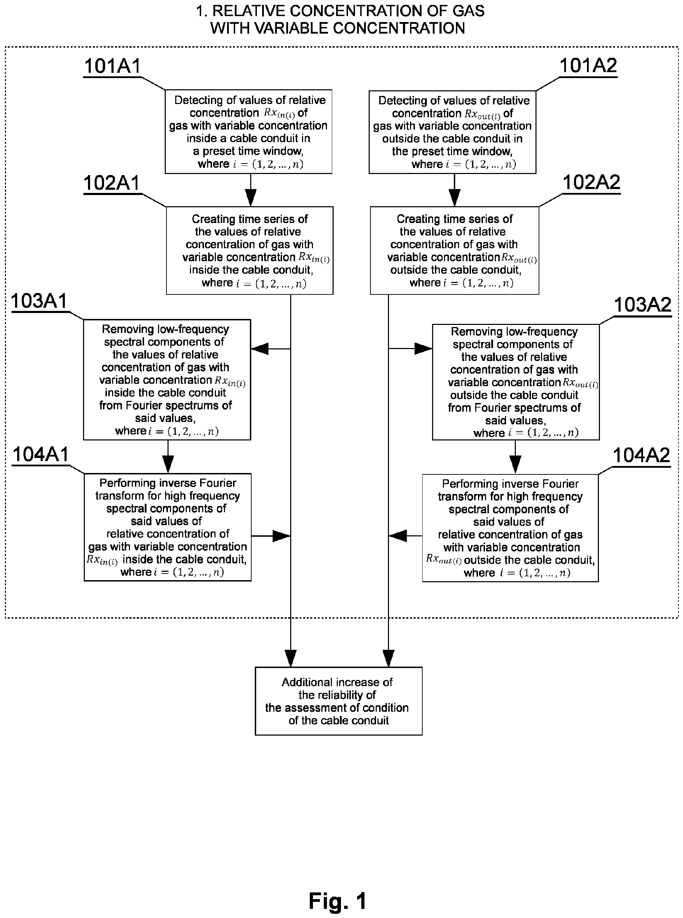

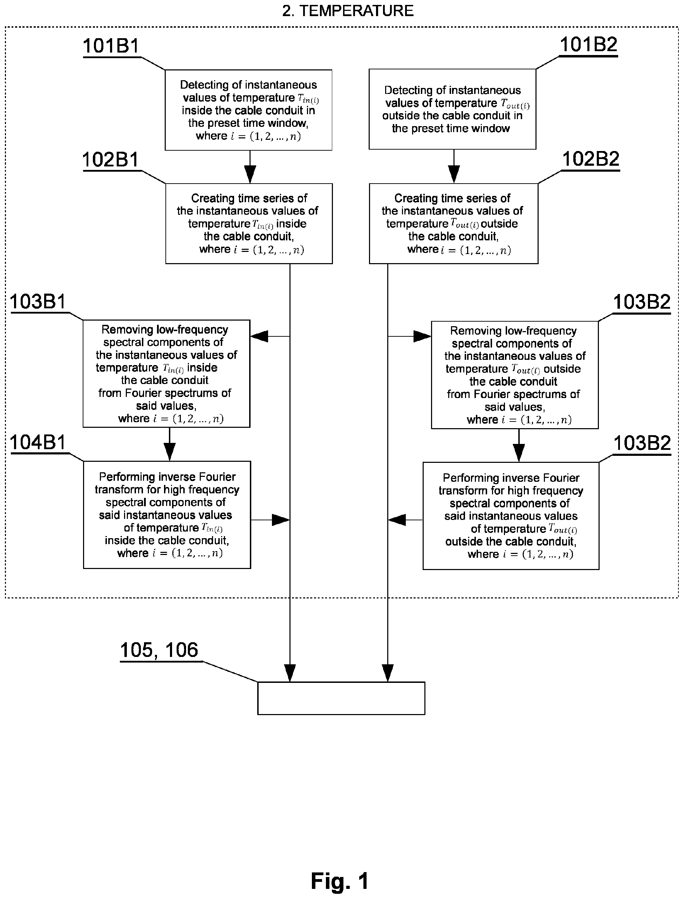

- Fig. 1: presents a flowchart of a method for monitoring of condition of a cable conduit, in particular a corrugated cable conduit, according to the invention;

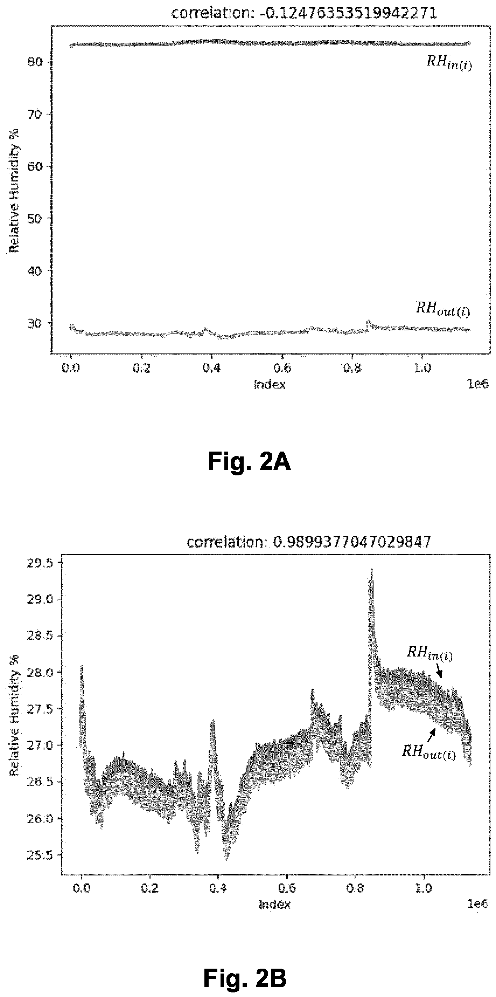

- Fig. 2A: presents a first example of a created time series of values of relative humidity *RH*_{*in*(*i*)} inside a cable conduit and a created time series of values of relative humidity *RH*_{*out*(*i*)} outside the cable conduit, when the cable conduit is considered as hermetic;
- Fig. 2B: presents a second example of a created time series of values of relative humidity *RH*_{*in*(*i*)} inside a cable conduit and a created time series of values of relative humidity *RH*_{*out*(*i*)} outside, when the cable conduit is considered as non-hermetic;

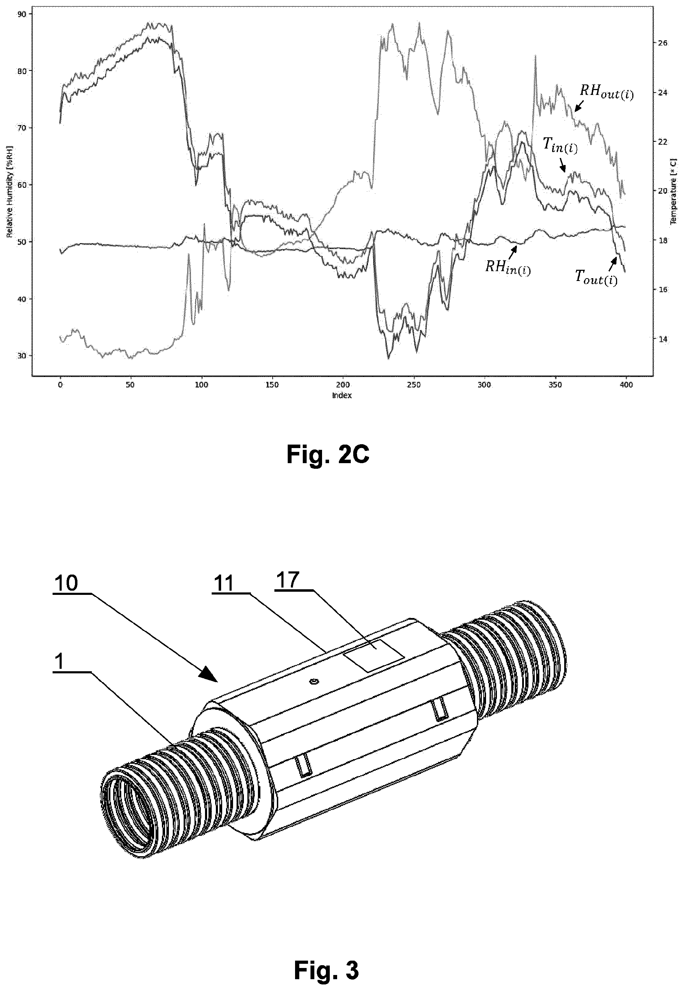

- Fig. 2C: presents an example of a created time series of values of relative humidity *RH*_{*in*(*i*)} inside a cable conduit, a created time series of values of relative humidity *RH*_{*out*(*i*)} outside the cable conduit, a created time series of values of temperature *T*_{*in*(*i*)} inside the cable conduit and a created time series of values of temperature *T*_{*out*(*i*)} outside the cable conduit, when the cable conduit is considered as non-hermetic;
- Fig. 3: presents a device for monitoring of condition of a cable conduit, in particular a corrugated cable conduit, according to the invention clamped on a cable conduit in a perspective view;

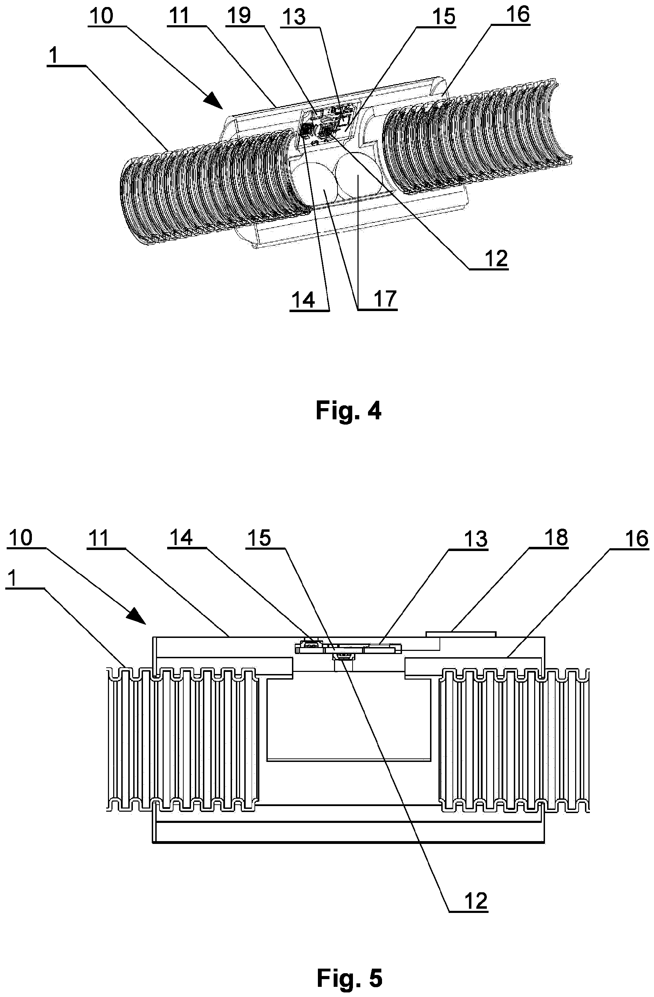

- Fig. 4: presents schematically a device for monitoring of condition of a cable conduit, in particular a corrugated cable conduit, according to the invention clamped on a cable conduit in a longitudinal section with uncovered sensors, a control unit and a battery pack;
- Fig. 5: presents schematically a device for monitoring of condition of a cable conduit, in particular a corrugated cable conduit, according to the invention clamped on a cable conduit in a longitudinal section.

### Detailed description of the invention

### The first embodiment of the invention

### A method for monitoring of condition of a cable conduit, in particular a corrugated cable conduit

In a method for monitoring of condition of a cable conduit, in particular a corrugated cable conduit, according to the first embodiment of the invention, values of relative concentration of gas with variable concentration *Rx*_{*in*(*i*)} inside a cable conduit 1 are detected 101A1 in a preset time window by a first sensor 12 of a device 10 for monitoring of condition of a cable conduit, in particular a corrugated cable conduit, and time series of the values of relative concentration of gas with variable concentration *Rx*_{*in*(*i*)} inside the cable conduit 1 are created 102A1, wherein each of said values has an assigned timestamp, where i = (1, 2, ... , *n*). Further, values of relative concentration of gas with variable concentration *Rx*_{*out*(*i*)} outside the cable conduit 1 are detected 101A2 by a second sensor 12 of the device 10 in the preset time window and time series of the values of relative concentration of gas with variable concentration *Rx*_{*out*(*i*)} outside the cable conduit 1 are created 102A2, wherein each of said values has an assigned timestamp, where i = (1, 2, ... , *n*). The detection 101A1 of the values of relative concentration of gas with variable concentration *Rx*_{*in*(*i*)} inside the cable conduit 1 and the detection 101A2 of the values of relative concentration of gas with variable concentration *Rx*_{*out*(*i*)} outside the cable conduit 1 is synchronized. The mentioned time window can be 5 hours and the detection 101A1, 101A2 of the mentioned values can take place every 5 minutes in case where the key aspect is fast detection of the mentioned values. Thus the sampling rate can be $\frac{1}{300}$ sps. The mentioned time window can also be 24 hours and the detection 101A1, 101A2 of the mentioned values can take place every 30 minutes in case where the key aspect is good life of a battery pack 17 of the device 10. Thus the sampling rate can be $\frac{1}{1800}$ sps. This is applicable for all values detected in the disclosed method.

The gas with variable concentration is water *H₂O* and the detected 101A1, 101A2 values are values of relative humidity *RH*_{*in*(*i*)} inside the cable conduit 1 and values of relative humidity *RH*_{*out*(*i*)} outside the cable conduit 1, where i = (1, 2, ... , *n*). Further, the created 102A1, 102A2 time series are, respectively, time series of the values of relative humidity *RH*_{*in*(*i*)} inside the cable conduit 1 and time series of values of relative humidity *RH*_{*out*(*i*)} outside the cable conduit 1, where i = (1, 2, ...,n). Performing of the detection 101A1, 101A2 of the values of relative humidity *RH*_{*in*(*i*)} inside the cable conduit 1 and the values of relative humidity *RH*_{*out*(*i*)} outside the cable conduit 1, where i = (1, 2, ... , *n*), ensures higher accuracy in assessing condition of the cable conduit 1 comparing to known solutions.

Next, a correlation coefficient is determined 109 based on the values of relative concentration of gas with variable concentration *Rx*_{*in*(*i*)} inside the cable conduit 1 from the created 102A1 time series and on the values of relative concentration of gas with variable concentration *Rx*_{*out*(*i*)} outside the cable conduit 1 from the created 102A2 time series, where i = (1, 2, ... , *n*). The determined 109 correlation coefficient is Pearson correlation coefficient. The application of Pearson correlation coefficient ensures the simplicity of determining 109 the correlation coefficient, which leads to the simplification of the operation of the disclosed method.

Finally, condition of the cable conduit 1 is assessed 110 by comparing the determined 109 correlation coefficient to a threshold value such that when said correlation coefficient exceeds the threshold value, the cable conduit 1 is considered non-hermetic. In case of application of the Pearson correlation coefficient the assessment 110 of condition of the cable conduit 1 can be for example performed such that when the determined 109 correlation coefficient is from -0.5 to 0 or from 0 to 0.5, then the cable conduit 1 is considered to be hermetic and when the determined 109 correlation coefficient is from - 0.5 to -1 or from 0.5 to 1, then the cable conduit 1 is considered to be non-hermetic.

A threshold value that, if exceeded, indicates that a cable conduit is to be considered non-hermetic can be different for different types of monitored cable conduits. This is influenced, among other things, by material and geometric parameters, such as length, inner diameter or outer diameter, of a cable conduit of a given type. It is also influenced by the age of such cable conduit. Further, a threshold value for a new cable conduit of a given type may differ from a threshold value for a used cable conduit of the same type. Hence, a threshold value is determined for each type of cable conduits experimentally. For example, for a new cable conduit, a hole with a diameter of 1 mm can be made in said conduit and, based on this, a threshold value indicating that the conduit is non-hermetic can be determined. For example, for a used cable conduit, it is possible to first determine its correlation coefficient, and then a correlation coefficient for a new cable conduit of the same type with identical parameters. The difference in their values indicates that the former one is non-hermetic, what can be caused, for example, by its damage. It may have cracks. In this case, a value of the correlation coefficient determined for the used cable conduit is to be considered as a threshold value. On the other hand, when a value of the correlation coefficient determined for the used cable conduit and a value of the correlation coefficient determined for the new cable conduit of the same type are the same, it can be assumed that the used cable conduit is suitable for further use. In this case, in order to determine a threshold value for the used cable conduit, a hole with a diameter of 1 mm can be made in the new cable conduit and, based on this, a threshold value indicating that the used cable conduit is non-hermetic can be determined.

The application of the disclosed method for monitoring of condition of a cable conduit, in particular a corrugated cable conduit, provides higher accuracy in assessing condition of the cable conduit 1, in particular in assessing a level of hermiticity of the cable conduit 1 and associated detection of cracks in such cable conduit, while maintaining the simplicity of its execution, and as a result provides greater reliability of said assessment compared to known solutions. Further, the disclosed method allows for early detection of non-hermiticity of the cable conduit 1 and as a consequence damage of cable systems located inside such cable conduit.

### A device for monitoring of condition of a cable conduit, in particular a corrugated cable conduit

A device 10 for monitoring of condition of a cable conduit, in particular a corrugated cable conduit, comprises a clamp 11 for clamping on a cable conduit 1. The clamp 11 can be made of flexible and impact resistant material such as polyamide or thermoplastic elastomer. The clamp 11 comprises a first sensor 12 exposed to the environment inside the cable conduit 1. The first sensor 12 can be exposed to the environment inside the cable conduit 1 through a membrane (not shown on the figures). The first sensor 12 is configured to detect 101A1 values of relative concentration of gas with variable concentration *Rx*_{*in*(*i*)} inside the cable conduit fitting 1, in this case values of relative humidity *RH*_{*in*(*i*)} inside the cable conduit 1, where i = (1, 2, ... , *n*). The clamp 11 comprises also a control unit 13, wherein the control unit 13 is configured to communicate with the first sensor 12. The clamp 11 comprises further a second sensor 14 exposed to the environment outside the cable conduit 1. The second sensor 14 can be exposed to the environment outside the cable conduit 1 through said membrane. The second sensor 14 is configured to detect 101A2 values of relative concentration of gas with variable concentration *Rx*_{*out*(*i*)} outside the cable conduit fitting 1, in this case values of relative humidity *RH*_{*out*(*i*)} outside the cable conduit 1, where i = (1, 2, ... , *n*). The first sensor 12 and the second sensor 14 can be separated from each other by gaskets (not shown on the figures). The control unit 13 is connected with the first sensor 12 and the second sensor 14, wherein the connections are realized via a printed circuit board 15. The control unit 13 is configured further to communicate with the second sensor 14 and to carry out the steps of the method according to the first embodiment of the invention. Furthermore, the device 10 comprises a seal 16 located on the internal surface of the body of the clamp 11. The seal 16 is made of elastomer softer than the one the clamp 11 is made of. The application of the seal 16 located on the internal surface of the body of the clamp 2 allows the cable conduit 1 to be repaired quickly using the disclosed device. Said seal 16 provides protection against uncontrolled penetration of moisture and fine particles into the interior of said conduit 1, and as a result, extends its life, and therefore life of cables located inside such cable conduit 1. The device 10 comprises also a battery pack 17 embedded in a body of the clamp 11. Further, the device 10 comprises a notification unit 18 configured to communicate with the control unit 13 and to notify a user of the device 10 about hermiticity/non-hermicity of the cable conduit 1. For example the notification unit 18 can be in the form of a Light Emitting Diode or Bluetooth radio. The control unit 13 and the notification unit 18 are embedded in a body of the clamp 11. In the other embodiments the notification unit 18 can be an external notification unit that communicates with the control unit 13 wirelessly.

The application of the device 10 for monitoring of condition of a cable conduit, in particular a corrugated cable conduit, as disclosed above allows to execute the method according to the invention and thus said device 10 is characterized by higher accuracy in assessing condition of the cable conduit 1, in particular assessing a level of hermiticity of the cable conduit 1 and associated detection of cracks in such cable conduit 1, and as a result said device 10 is characterized by greater reliability of said assessment compared to known solutions. Further, the disclosed device 10 allows for early detection of non-hermiticity of the cable conduit 1 and as a consequence damage of cable systems located inside such cable conduit 1.

### The second embodiment of the invention

### A method for monitoring of condition of a cable conduit, in particular a corrugated cable conduit

The second embodiment of the method for monitoring of condition of a cable conduit, in particular a corrugated cable conduit, is like the first embodiment, with the difference that the determined 109 correlation coefficient is Spearman correlation coefficient. The application of Spearman correlation coefficient ensures acceleration of the disclosed method as the use of said correlation coefficient makes it possible to use smaller time windows than those used with Pearson correlation coefficient.

### An device for monitoring of condition of a cable conduit, in particular a corrugated cable conduit

The second embodiment of the device 10 for monitoring of condition of a cable conduit, in particular a corrugated cable conduit, is like the first embodiment, with the difference that the control unit 13 is configured to carry out the steps of the method according to the second embodiment of the invention.

### The third embodiment of the invention

### A method for monitoring of condition of a cable conduit, in particular a corrugated cable conduit

The third embodiment of the method for monitoring of condition of a cable conduit, in particular a corrugated cable conduit, is like the first embodiment or the second embodiment, with the difference that after the steps of creating 102A1 time series of the values of relative humidity *RH*_{*in*(*i*)} inside the cable conduit 1 and creating 102A2 time series of the values of relative humidity *RH*_{*out*(*i*)} outside the cable conduit 1, where i = (1, 2, ... , *n*), and before the step of determining 109 a correlation coefficient based on the values of relative humidity *RH*_{*in*(*i*)} inside the cable conduit 1 from the created 102A1 time series and on the values of relative humidity *RH*_{*out*(*i*)} outside the cable conduit 1 from the created 102A2 time series, where *i =* (1, 2, ... , *n*), low-frequency spectral components of the values of relative humidity *RH*_{*in*(*i*)} inside the cable conduit 1 from the created 102A1 time series and low-frequency spectral components of the values of relative humidity *RH*_{*out*(*i*)} outside the cable conduit 1 from the created 102A2 time series are removed 103A1, 103A2 from Fourier spectrums of said values, where i = (1, 2, ...,n), and inverse Fourier transform is performed 104A1 for high frequency spectral components of said values of relative humidity *RH*_{*in*(*i*)} inside the cable conduit 1 and inverse Fourier transform is performed 104A2 for high frequency spectral components of said values of relative humidity *RH*_{*out*(*i*)} outside the cable conduit 1, where i = (1, 2, ... , *n*).

The application of the disclosed steps ensures a further increase in the reliability of the method for monitoring of condition of a cable conduit, in particular a corrugated cable conduit. This is because the removed 103A1 low-frequency spectral components of the values of relative concentration of gas with variable concentration *Rx*_{*in*(*i*)} inside the cable conduit 1, so in this case of the values of relative humidity *RH*_{*in*(*i*)} inside the cable conduit 1, and the removed 103A2 low-frequency spectral components of the values relative concentration of gas with variable concentration *Rx*_{*out*(*i*)} outside the cable conduit 1, so in this case of the values of relative humidity *RH*_{*out*(*i*)} outside the cable conduit 1, are associated with diffusion of molecules of gas with variable concentration inside the cable conduit 1, so in this case molecules of *H₂O* inside the cable conduit 1, and molecules of gas with variable concentration outside the cable conduit 1, so in this case molecules of *H₂O* outside the cable conduit 1, which negatively affects the assessment 110 of condition of the cable conduit 1. The high frequency spectral components of said values left are the most valuable components for the purpose of the assessment 110 of condition of the cable conduit 1, and may, for example, be related to the presence of cracks in such cable conduit 1, which in turn indicates lack of the hermiticity of the cable conduit 1.

### A device for monitoring of condition of a cable conduit, in particular a corrugated cable conduit

The third embodiment of the device 10 for monitoring of condition of a cable conduit, in particular a corrugated cable conduit, is like the first embodiment or the second embodiment, with the difference that the control unit 13 is configured to carry out the steps of the method according to the third embodiment of the invention. In the other embodiments, the device 10 comprises a high-pass filter 19 configured to communicate with the control unit 13 and to carry out the steps of the method according to the third embodiment of the invention.

### The fourth embodiment of the invention

### A method for monitoring of condition of a cable conduit, in particular a corrugated cable conduit

The fourth embodiment of the method for monitoring of condition of a cable conduit, in particular a corrugated cable conduit, is like the first embodiment or the second embodiment or the third embodiment, with the difference that in addition to the detection 101A1 of the values of relative humidity *RH*_{*in*(*i*)} inside the cable conduit 1, instantaneous values of temperature *T*_{*in*(*i*)} are detected 101B1 by the first sensor 12 in said preset time window and there are created 102B1 time series of the instantaneous values of temperature *T*_{*in*(*i*)} inside the cable conduit 1, wherein each of the instantaneous values of temperature *T*_{*in*(*i*)} inside the cable conduit 1 has an assigned timestamp, where i = (1, 2, ... , *n*). Further, in addition to the detection 101A2 of the values of relative humidity *RH*_{*out*(*i*)} outside the cable conduit 1, instantaneous values of temperature *T*_{*out*(*i*)} are detected 101B2 by the second sensor 14 in said preset time window and there are created 102B2 time series of the instantaneous values of temperature *T*_{*out*(*i*)} outside the cable conduit 1, wherein each of the instantaneous values of temperature *T*_{*out*(*i*)} outside the cable conduit 1 has an assigned timestamp, where i = (1, 2, ... , *n*). The detection 101B1 of the instantaneous values of temperature *T*_{*in*(*i*)} inside the cable conduit 1 and the detection 101B2 of the instantaneous values of temperature *T*_{*out*(*i*)} outside the cable conduit 1 is synchronized. Further said detection 101B1 of the instantaneous values of temperature *T*_{*in*(*i*)} inside the cable conduit 1 and said detection 101B2 of the instantaneous values of temperature *T*_{*out*(*i*)} outside the cable conduit 1 are synchronized with said detection 101A1 of the values of relative humidity *RH*_{*in*(*i*)} inside the cable conduit 1 and said detection 101A2 of the values of relative humidity *RH*_{*out*(*i*)} outside the cable conduit 1. In the other embodiments, said values can be detected 101B1, 101B2 with the predefined sampling rate within said preset time window.

The values of relative humidity *RH*_{*in*(*i*)} inside the cable conduit 1 from the created 102A1 time series and the values of relative humidity *RH*_{*out*(*i*)} outside the cable conduit 1 from the created 102A2 time series are converted 105, 106 into, respectively, values of absolute humidity *AH*_{*in*(*i*)} inside the cable conduit 1 and values of absolute humidity *AH*_{*out*(*i*)} outside the cable conduit 1 to create 107, 108 time series of these values, wherein said conversions 105, 106 are performed with the usage of, respectively, the instantaneous values of temperature *T*_{*in*(*i*)} inside the cable conduit 1 from the created 102B1 time series and the instantaneous values of temperature *T*_{*out*(*i*)} outside the cable conduit 1 from the created 102B2 time series, where i = (1, 2, ... , *n*); and according to the formula ${AH}_{in \left(i\right) / out \left(i\right)} = 216.7 \left(\frac{\frac{{RH}_{in \left(i\right) / out \left(i\right)}}{100} A exp \left(\frac{{mT}_{in \left(i\right) / out \left(i\right)}}{T + {T}_{in \left(i\right) / out \left(i\right)}}\right)}{273.15 + {T}_{in \left(i\right) / out \left(i\right)}}\right)$ where
*AH*_{*in*(*i*)/*out*(*i*)} - a value of absolute humidity inside or outside the cable conduit 1, where i = (1, 2, ..., *n*);
*RH*_{*in*(*i*)/*out*(*i*)} - a value of relative humidity inside or outside the cable conduit 1, where i = (1, 2, ..., *n*);
*T*_{*in*(*i*)/*out*(*i*)} - an instantaneous value of temperature inside or outside the cable conduit 1, where i = (1, 2, ..., *n*);
*m* = 17.62
*T* = 243.21 °C
*A* = 6.112 *hPa*
wherein *m*, *T, A* constitute conversion parameters for determining values of absolute humidity *AH*_{*in*(*i*)/*out*(*i*)} inside or outside the cable conduit 1, wherein said conversion parameters result from adopted SI measurement units.

In the next step the correlation coefficient is determined 109 based on the values of absolute humidity *AH*_{*in*(*i*)} inside the cable conduit 1 from the created 107 time series and on the values of absolute humidity *AH*_{*out*(*i*)} outside the cable conduit 1 from the created 108 time series, where i = (1, 2, ... ,*n*), instead of the values of relative *RH*_{*in*(*i*)} inside the cable conduit 1 from the created 102A1 time series and the values of relative humidity *RH*_{*out*(*i*)} outside the cable conduit 1 from the created 102A2 time series, where i = (1, 2, ... ,*n*).

The application of the above disclosed method steps ensures an additional increase in the reliability of the method for monitoring of condition of a cable conduit, in particular a corrugated cable conduit.

### A device for monitoring of condition of a cable conduit, in particular a corrugated cable conduit

The fourth embodiment of the device 10 for monitoring of condition of a cable conduit, in particular a corrugated cable conduit, is like the first embodiment or the second embodiment or the third embodiment, with the difference that the first sensor 12 is configured further to detect 101B1 instantaneous values of temperature *T*_{*in*(*i*)} inside the cable conduit 1, the second sensor 14 is configured further to detect 101B2 instantaneous values of temperature *T*_{*out*(*i*)} outside the cable conduit 1, where i = (1, 2, ... , *n*), and the control unit 13 is configured to carry out the steps of the method according to the fourth embodiment of the invention.

### The fifth embodiment of the invention

### A method for monitoring of condition of a cable conduit, in particular a corrugated cable conduit

The fifth embodiment of the method for monitoring of condition of a cable conduit, in particular a corrugated cable conduit, is like the fourth embodiment, with the difference that after the steps of creating 102B1 time series of the instantaneous values of temperature *T*_{*in*(*i*)} inside the cable conduit 1 in said preset time window and creating 101B1 time series of the instantaneous temperature *T*_{*out*(*i*)} outside the cable conduit 1 in said preset time window, where i = (1, 2, ... , *n*), and before the steps of conversions 105, 106 of the values of relative humidity *RH*_{*in*(*i*)} inside the cable conduit 1 and the values of relative humidity *RH*_{*out*(*i*)} outside the cable conduit 1 into, respectively, the values of absolute humidity *AH*_{*in*(*i*)} inside the cable conduit 1 and the values of absolute humidity *AH*_{*out*(*i*)} outside the cable conduit 1, where *i =* (1, 2, ... , *n*); low-frequency spectral components of the instantaneous values of temperature *T*_{*in*(*i*)} inside the cable conduit 1 from the created 102B1 time series are removed 103B1 from Fourier spectrums of said values and low-frequency spectral components of the instantaneous values of temperature *T*_{*out*(*i*)} outside the cable conduit 1 from the created 102B2 time series are removed 103B2 from Fourier spectrums of said values, where i = (1, 2, ... , *n*). Next, inverse Fourier transform is performed 104B1 for high frequency spectral components of the instantaneous values of temperature *T*_{*in*(*i*)} inside the cable conduit 1 and inverse Fourier transform is performed 104B2 for high frequency spectral components of the instantaneous values of temperature *T*_{*out*(*i*)} outside the cable conduit 1, where i = (1, 2, ... ,*n*).

The application of the disclosed steps ensures another increase in the reliability of the method for monitoring of condition of a cable conduit, in particular a corrugated cable conduit. Thus, the disclosed here method steps ensure the highest increase in the reliability of the method for monitoring of condition of a cable conduit, in particular a corrugated cable conduit, compared to known solutions.

### A device for monitoring of condition of a cable conduit, in particular a corrugated cable conduit

The fifth embodiment of the device 10 for monitoring of condition of a cable conduit, in particular a corrugated cable conduit, is like the fourth embodiment, with the difference that the control unit 13 is configured to carry out the steps of the method according to the fifth embodiment of the invention. In the other embodiments, the device 10 comprises the high-pass filter 19 configured to communicate with the control unit 13 and to carry out the steps of the method according to the fifth embodiment of the invention.

### The sixth embodiment of the invention

### A method for monitoring of condition of a cable conduit, in particular a corrugated cable conduit

The sixth embodiment of the method for monitoring of condition of a cable conduit, in particular a corrugated cable conduit, is like the first embodiment or the second embodiment or the third embodiment, with the difference that the gas with variable concentration is carbon dioxide *CO*₂ and the detected values 101A1, 101A2 are values of relative concentration of carbon dioxide *RCO*_{2(*in*(*i*))} inside the cable conduit 1 and values of relative concentration of carbon dioxide *RCO*_{2(*out*(*i*))} outside the cable conduit 1, where i = (1, 2, ... ,*n*).

The detection 101A1, 101A2 of the values of relative concentration of carbon dioxide *RCO*_{2(*in*(*i*))} inside the cable conduit 1 and the values of relative concentration of carbon dioxide *RCO*_{2(*out*(*i*))} outside the cable conduit 1, where i = (1, 2, ... , *n*), is particularly applicable in food processing facilities, due to the fact that it is emitted during fermentation of food products.

### A device for monitoring of condition of a cable conduit, in particular a corrugated cable conduit

The sixth embodiment of the device 10 for monitoring of condition of a cable conduit, in particular a corrugated cable conduit, is like the first embodiment or the second embodiment or the third embodiment, with the difference that the first sensor 12 of the device 10 is configured to detect 101A1 values of relative concentration of carbon dioxide *RCO*_{2(*in*(*i*))} inside the cable conduit 1 and the second sensor 14 is configured to detect 101A2 values of relative concentration of carbon dioxide *RCO*_{2(*out*(*i*))} outside the cable conduit 1.

### The seventh embodiment of the invention

### A method for monitoring of condition of a cable conduit, in particular a corrugated cable conduit

The seventh embodiment of the method for monitoring of condition of a cable conduit, in particular a corrugated cable conduit, is like the first embodiment or the second embodiment or the third embodiment, with the difference that the gas with variable concentration is methane *CH*₄ and the detected values 101A1, 101A2 are values of relative concentration of methane *CH*_{4(*in*(*i*))} inside the cable conduit 1 and values of relative concentration of methane *CH*_{4(*out*(*i*))} outside the cable conduit 1, where i = (1, 2, ... ,*n*).

The detection 101A1, 101A2 of the values of relative concentration of methane *CH*_{4(*in*(*i*))} inside the cable conduit 1 and the values of relative concentration of methane *CH*_{4(*out*(*i*))} outside the cable conduit 1, where i = (1, 2, ... , *n*), is particularly applicable in places where there are large changes in the concentration of this gas, e.g. sewage or pig rearing sites. Further, other volatile organic compounds can also be used in the disclosed method.

### A device for monitoring of condition of a cable conduit, in particular a corrugated cable conduit

The seventh embodiment of the device 10 for monitoring of condition of a cable conduit, in particular a corrugated cable conduit, is like the first embodiment or the second embodiment or the third embodiment, with the difference that the first sensor 12 of the device 10 is configured to detect 101A1 values of relative concentration of methane *CH*_{4(*in*(*i*))} inside the cable conduit 1 and the second sensor 14 is configured to detect 101A2 values of relative concentration of methane *CH*_{4(*out*(*i*))} outside the cable conduit 1.

### Designations:

1 -cable conduit
10 - device for monitoring of condition of a cable conduit
11 - clamp
12 - first sensor
13 - control unit
14 - second sensor
15 - printed circuit board
16 - seal
17 - battery pack
18 - notification unit
19 - high-pass filter

## Claims

1. A method for monitoring of condition of a cable conduit, in particular a corrugated cable conduit, comprising the following steps:
- detecting (101A1) values of relative concentration of gas with variable concentration *Rx*_{*in*(*i*)} inside a cable conduit (1) in a preset time window and creating (102A1) time series of the values of relative concentration of gas with variable concentration *Rx*_{*in*(*i*)} inside the cable conduit (1), wherein each of said values has an assigned timestamp or each of said values is detected (101A1) with a predefined sampling rate, where i = (1, 2, ... ,*n*);
- detecting (101A2) values of relative concentration of gas with variable concentration *Rx*_{*out*(*i*)} outside the cable conduit (1) in the preset time window and creating (102A2) time series of the values of relative concentration of gas with variable concentration *Rx*_{*out*(*i*)} outside the cable conduit (1), wherein each of said values has an assigned timestamp or each of said values is detected (101A2) with the predefined sampling rate, where i = (1, 2, ... ,*n*);
wherein the detection (101A1) of the values of relative concentration of gas with variable concentration *Rx*_{*in*(*i*)} inside the cable conduit (1) and the detection (101A2) of the values of relative concentration of gas with variable concentration *Rx*_{*out*(*i*)} outside the cable conduit (1) is synchronized;
- determining (109) a correlation coefficient based on the values of relative concentration of gas with variable concentration *Rx*_{*in*(*i*)} inside the cable conduit (1) from the created (102A1) time series and on the values of relative concentration of gas with variable concentration *Rx*_{*out*(*i*)} outside the cable conduit (1) from the created (102A2) time series, where i = (1, 2, ... ,*n*);
- assessing (110) condition of the cable conduit (1) by comparing the determined (109) correlation coefficient to a threshold value such that when said correlation coefficient exceeds the threshold value, the cable conduit (1) is considered non-hermetic.

2. The method according to claim 1, wherein after the steps of
- creating (102A1) time series of the values of relative concentration of gas with variable concentration *Rx*_{*in*(*i*)} inside the cable conduit (1) and creating (102A2) time series of the values of relative concentration of gas with variable concentration *Rx*_{*out*(*i*)} outside the cable conduit (1), where *i* = (1, 2, ... , *n*); and before the step of
- determining (109) a correlation coefficient based on the values of relative concentration of gas with variable concentration *Rx*_{*in*(*i*)} inside the cable conduit (1) from the created (102A1) time series and on the values of relative concentration of gas with variable concentration *Rx*_{*out*(*i*)} outside the cable conduit (1) from the created (102A2) time series, where *i* = (1, 2, ..., *n*);
- low-frequency spectral components of the values of relative concentration of gas with variable concentration *Rx*_{*in*(*i*)} inside the cable conduit (1) from the created (102A1) time series and low-frequency spectral components of the values of relative concentration of gas with variable concentration *Rx*_{*out*(*i*)} outside the cable conduit (1) from the created (102A2) time series are removed (103A1, 103A2) from Fourier spectrums of said values, where *i* = (1, 2, ..., *n*); and
- inverse Fourier transform is performed (104A1) for high frequency spectral components of said values of relative concentration of gas with variable concentration *Rx*_{*in*(*i*)} inside the cable conduit (1) and inverse Fourier transform is performed (104A2) for high frequency spectral components of said values of relative concentration of gas with variable concentration *Rx*_{*out*(*i*)} outside the cable conduit (1), where *i* = (1, 2, ... ,*n*).

3. The method according to claim 1 or 2, wherein the gas with variable concentration is carbon dioxide *CO*₂ and the detected values (101A1, 101A2) are values of relative concentration of carbon dioxide *RCO*_{2(*in*(*i*))} inside the cable conduit (1) and values of relative concentration of carbon dioxide *RCO*_{2(*out*(*i*))} outside the cable conduit (1), where *i* = (1, 2, ... ,*n*).

4. The method according to claim 1 or 2, wherein the gas with variable concentration is methane *CH*₄ and the detected values (101A1, 101A2) are values of relative concentration of methane *CH*_{4(*in*(*i*))} inside the cable conduit (1) and values of relative concentration of methane *CH*_{4(*out*(*i*))} outside the cable conduit (1), where *i* = (1, 2, ... ,*n*).

5. The method according to claim 1 or 2, wherein the gas with variable concentration is water *H₂O* and the detected (101A1, 101A2) values are values of relative humidity *RH*_{*in*(*i*)} inside the cable conduit (1) and values of relative humidity *RH*_{*out*(*i*)} outside the cable conduit (1), where *i* = (1, 2, ..., *n*).

6. The method according to any of the preceding claims from 1 to 5, wherein the determined (109) correlation coefficient is Pearson correlation coefficient.

7. The method according to any of the preceding claims from 1 to 5, wherein the correlation coefficient is Spearman correlation coefficient.

8. The method according to any of the preceding claims from 5 to 7, wherein
- in addition to the detection (101A1) of the values of relative humidity *RH*_{*in*(*i*)} inside the cable conduit (1), instantaneous values of temperature *T*_{*in*(*i*)} are detected (101B1) in said preset time window and there are created (102B1) time series of the instantaneous values of temperature *T*_{*in*(*i*)} inside the cable conduit (1), wherein each of the instantaneous values of temperatures *T*_{*in*(*i*)} inside the cable conduit (1) has an assigned timestamp or is detected (101B1) with the predefined sampling rate, where *i* = (1, 2, ..., *n*); and
- in addition to the detection (101A2) of the values of relative humidity *RH*_{*out*(*i*)} outside the cable conduit (1), instantaneous values of temperature *T*_{*out*(*i*)} are detected (101B2) in said preset time window and there are created (102B2) time series of the instantaneous values of temperature *T*_{*out*(*i*)} outside the cable conduit (1), wherein each of the instantaneous values of temperature *T*_{*out*(*i*)} outside the cable conduit (1) has an assigned timestamp or is detected (101B2) with the predefined sampling rate, where *i* = (1, 2, ... ,*n*);
- the values of relative humidity *RH*_{*in*(*i*)} inside the cable conduit (1) from the created (102A1) time series and the values of relative humidity *RH*_{*out*(*i*)} outside the cable conduit (1) from the created (102A2) time series are converted (105, 106) into, respectively, values of absolute humidity *AH*_{*in*(*i*)} inside the cable conduit (1) and values of absolute humidity *AH*_{*out*(*i*)} outside the cable conduit (1) to create (107, 108) time series of these values, wherein said conversions (105, 106) are performed with the usage of, respectively, the instantaneous values of temperature *T*_{*in*(*i*)} inside the cable conduit (1) from the created (102B1) time series and the instantaneous values of temperature *T*_{*out*(*i*)} outside the cable conduit (1) from the created (102B2) time series, where *i* = (1, 2, ... ,*n*), and according to the formula ${AH}_{in \left(i\right) / out \left(i\right)} = 216.7 \left(\frac{\frac{{RH}_{in \left(i\right) / out \left(i\right)}}{100} A exp \left(\frac{{mT}_{in \left(i\right) / out \left(i\right)}}{T + {T}_{in \left(i\right) / out \left(i\right)}}\right)}{273.15 + {T}_{in \left(i\right) / out \left(i\right)}}\right)$ where
*AH*_{*in*(*i*)/*out*(*i*)} - a value of absolute humidity inside or outside the cable conduit (1), where *i* = (1, 2, ..., *n*);
*RH*_{*in*(*i*)/*out*(*i*)} - a value of relative humidity inside or outside the cable conduit (1), where *i* = (1, 2, ..., *n*);
*T*_{*in*(*i*)/*out*(*i*)} - an instantaneous value of temperature inside or outside the cable conduit (1), where *i* = (1, 2, ... ,*n*);
*m* = 17.62
*T* = 243.21 °C
*A* = 6.112 *hPa*
wherein *m*, *T, A* constitute conversion parameters for determining values of absolute humidity *AH*_{*in*(*i*)/*out*(*i*)} inside or outside the cable conduit (1), wherein said conversion parameters result from adopted SI measurement units;
- and then the correlation coefficient is determined (109) based on the values of absolute humidity *AH*_{*in*(*i*)} inside the cable conduit (1) from the created (107) time series and on the values of absolute humidity *AH*_{*out*(*i*)} outside the cable conduit (1) from the created (108) time series, where *i* = (1, 2, ... ,*n*).

9. The method according to claim 8, wherein
after the steps of
- creating (102B1) time series of the instantaneous values of temperature *T*_{*in*(*i*)} inside the cable conduit (1) in said preset time window and creating (102B2) time series of the instantaneous values of temperature *T*_{*out*(*i*)} outside the cable conduit fitting (1) in said preset time window, where *i* = (1, 2, ... , *n*), and
before the steps of
- conversions (105, 106) of the values of relative humidity *RH*_{*in*(*i*)} inside the cable conduit (1) and the values of relative humidity *RH*_{*out*(*i*)} outside the cable conduit (1) into, respectively, the values of absolute humidity *AH*_{*in*(*i*)} inside the cable conduit (1) and the values of absolute humidity *Ax*_{*out*(*i*)} outside the cable conduit (1), where *i* = (1, 2, ... , *n*);
- low-frequency spectral components of the instantaneous values of temperature *T*_{*in*(*i*)} inside the cable conduit (1) from the created (102B1) time series are removed (103B1) from Fourier spectrums of said values and low-frequency spectral components of the instantaneous values of temperature *T*_{*out*(*i*)} outside the cable conduit (1) from the created (102B2) time series are removed (103B2) from Fourier spectrums of said values, where *i* = (1, 2, ... , *n*); and
- inverse Fourier transform is performed (104B1) for high frequency spectral components of the instantaneous values of temperature *T*_{*in*(*i*)} inside the cable conduit (1) and inverse Fourier transform is performed (104B2) for high frequency spectral components of the instantaneous values of temperature *T*_{*out*(*i*)} outside the cable conduit (1), where *i* = (1, 2, ..., *n*).

10. A device (10) for monitoring of condition of a cable conduit, in particular a corrugated cable conduit, comprising
- a clamp (11) for clamping on a cable conduit (1),
wherein the clamp (11) comprises at least one first sensor (12) exposed to the environment inside the cable conduit (1), wherein the at least one first sensor (12) is configured to detect (101A1) values of relative concentration of gas with variable concentration *Rx*_{*in*(*i*)} inside a cable conduit (1);
- a control unit (13), wherein the control unit (13) is configured to communicate with the at least one first sensor (12),
**characterized in that**,
- the clamp (11) comprises further at least one second sensor (14) exposed to the environment outside the cable conduit (1), wherein the at least one second sensor (14) is configured to detect (101A2) values of relative concentration of gas with variable concentration *Rx*_{*out*(*i*)} outside the cable conduit (1);
- the control unit (13) is configured further to communicate with the at least one second sensor (14) and to carry out the steps of the method according to any of the preceding claims from 1 to 7.

11. The device according to claim 10, wherein the at least one first sensor (12) is configured to detect (101A1) values of relative humidity *RH*_{*in*(*i*)} inside the cable conduit (1) and to detect (101B1) instantaneous values of temperature *T*_{*in*(*i*)} inside the cable conduit (1) and wherein the at least one second sensor (14) is configured to detect (101A2) values of relative humidity *RH*_{*out*(*i*)} inside the cable conduit (1) and to detect (101B2) instantaneous values of temperature *T*_{*out*(*i*)} outside the cable conduit (1), where *i* = (1, 2, ... ,*n*), wherein the control unit (13) is configured further to carry out the steps of the method according to claim 8.

12. The device according to claim 10 or 11, wherein the control unit (13) is configured to carry out the steps of the method according to claim 2 or claim 9 or the device (10) comprises a high-pass filter (19) configured to communicate with the control unit (13) and to carry out the steps of the method according to claim 2 or claim 9.

13. The device according to any of preceding claims from 10 to 12, wherein the device (10) comprises a seal (16) located on the internal surface of the body of the clamp (11).

14. The device according to any of preceding claims from 10 to 13, wherein the device (10) comprises a notification unit (18) configured to communicate with the control unit (13) and to notify a user of the device (10) about hermiticity/non-hermicity of the cable conduit (1).

15. The device according claim 14, wherein the control unit (13) and the notification unit (18) are embedded in the body of the clamp (11).
